# EUROPEAN PATENT SPECIFICATION

(11) **EP 0 473 526 B1**
(45) Date of publication and mention of the grant of the patent: **04.05.1994**
(21) Application number: 91500071.5
(22) Date of filing: 27.06.1991
(51) Int. Cl.: F16F 9/348, F16F 9/32

(54) **Piston for shock absorbers**
Stossdämpferkolben
Piston d'amortisseur de chocs

(30) Priority: 10.07.1990 ES 9002204 U
(43) Date of publication of application: 04.03.1992
(73) Proprietor: LA INDUSTRIAL PLASTICA Y METALURGICA, S.A., 01400 Areta-Llodio (Alava) (ES)
(72) Inventor: Marcotegui Ros, Jose Antonio, Pamplona (ES)
(74) Representative: Carpintero Lopez, Francisco

(56) References cited:
- DE-U- 8 908 341
- FR-A- 2 098 861
- GB-A- 775 221
- GB-A- 2 207 977
- GB-A- 2 228 059
- PATENT ABSTRACTS OF JAPAN vol. 10, no. 257 (M-513)(2313)3 September 1986 & JP-A-61 082 072 ( NOK CORP. )

## Description

### SPECIFICATION

### OBJECT OF THE INVENTION

The present invention relates to a piston, useful for shock absorbers, with the piston as such mounted on a rod that is displaceable within the shock absorber's respective casing or cylinder, which piston is mounted together with flexible sheets and washers that are supported on the former's respective surfaces or bases in order to control liquid flow in and out of the two chambers delimited by the said piston, to which end both this latter and the said sheets and washers are provided with holes, those of the flexible sheets having a different bore and tending to block the piston holes, thus allowing the flow of oil in and out of the chambers to be controlled or adjusted.

### BACKGROUND OF THE INVENTION

The conventional pistons (GB-A-2 207 977 e.g.) with which shock absorbers are provided, fixed to an axially displaceable rod within the shock absorber's cylinder, that further incorporate flexible sheets and washers, pose a twofold problem and disadvantage, to wit:
1.- High adhesion of the flexible sheets overlying the piston's end surfaces, which adhesion is a consequence of the flat surfaces of the piston, and likewise because of the actual viscosity of the oil going in and out of the two chambers delimited by such piston.
2.- The change in piston displacement direction inside the shock absorber's cylinder body causes sudden and alternating pounding of the flexible sheets, which inevitably causes noise, for the fact that both flat surfaces knock against each other will inevitably result in a considerable amount of noise.

### DESCRIPTION OF THE INVENTION

The piston subject hereof has been designed to fully solve the above problems, putting forth a simple and hugely efficient solution in such respect. According to the invention this is achieved with the features as defined in the characterizing part of claim 1.

A preferred feature of the piston subject hereof lies in that the annular channel with which the piston is provided in order to mount the respective teflon® ring or segment that acts as a guide for the piston's axial displacement in either direction in relation to the casing or cylinder within which it moves, is provided with an annular rib of angular profile constituting the means of attachment for this teflon® ring or segment, all in order to avoid noise and dispersions.

### DESCRIPTION OF THE DRAWINGS

In order to provide a fuller description and contribute to the complete understanding of the characteristics of this invention, a set of drawings is attached to the specification as an integral part thereof which, while purely illustrative and not fully comprehensive, shows the following:

Figure 1.- Is a plan view of the piston, and specifically of the surface that is almost wholly uneven or chipped.

Figure 2.- Is a sectional breakdown along line A-A of the previous figure showing the recessed areas where the piston holes are in fact provided.

Figure 3.- Is a plan view of the same piston, and specifically of the surface opposite the one shown in figure 1, which surface carries closed crests or projections that surround pairs of piston holes, which surface is also provided with projections or crests surrounding pairs of piston holes, the surface of which projections or crests is also uneven or chipped.

Figure 4.- Is a section along line B-B of the above figure, detailing the shape of the recessed area where the aforesaid projections are provided.

Figure 5.- Is a side elevation view of the piston subject hereof.

Figure 6.- Is a section along line C-C of figure 3.

Figure 7.- Is, finally, an exploded representation of the piston subject of the invention, as mounted on the respective rod in a conventional shock absorber, with a sectional view of the corresponding washers and flexible sheets used in mounting the said piston upon the said rod.

### PREFERRED EMBODIMENT OF THE INVENTION

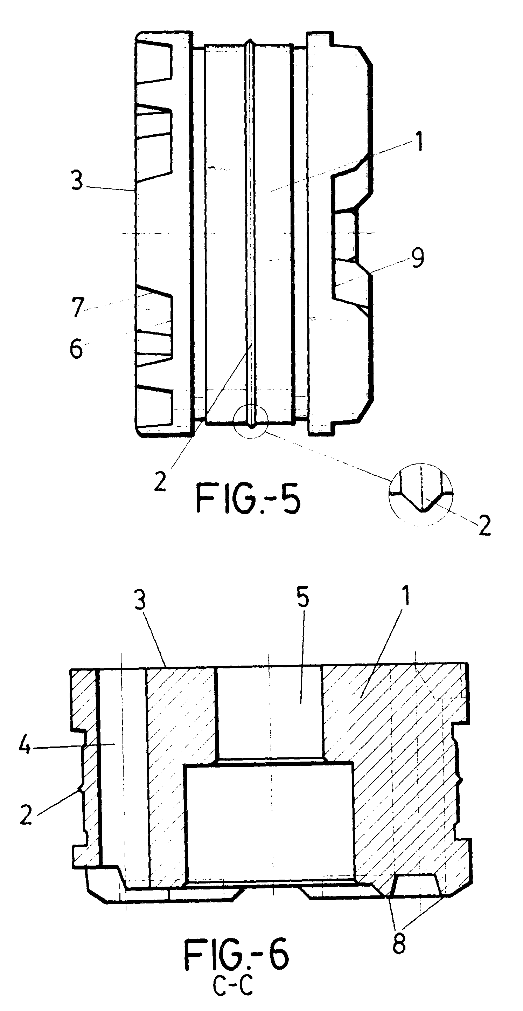

In the embodiment of the invention shown in the figures, the piston (1) subject of the invention, in addition to the novel features that will be discussed hereinafter, is centrally and annularly provided with a rib (2) whose shape is shown with full particulars in the breakdown of figure 5, which rib (2) is useful for attachment of the respective teflon® ring or segment guiding such piston (1) as it moves within the cylinder of the shock absorber where it is located. Such rib (2) is centrally disposed, though this need not be the case, or the piston might even have more than one rib.

Another feature of the piston (1) subject of the invention lies in that one of the surfaces has an unevenness (3) defining an irregular embossment or "chipping" on the whole of this surface, save for the holes (4) with which the piston is provided close to its periphery, and obviously with the exception of the central hole (5) through which the piston (1) itself is coupled to the shock absorber's rod. This unevenness is not provided on the recessed areas (6) defined between the actual holes (5) and the piston (1) periphery, which areas are collaterally delimited by divergent inclined planes (7), such recessed areas (6) and the collateral divergent inclined planes (7) being shown with full particulars in said figure 2.

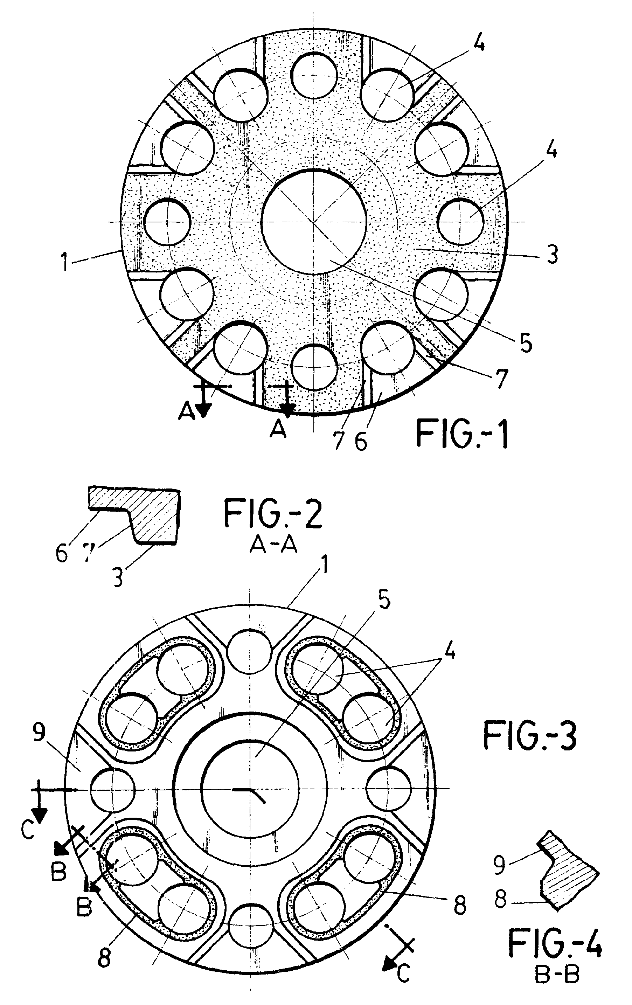

The opposite surface of the said piston (1) is provided with projections (8) surrounding pairs of adjacent holes (4), which projections (8) define narrow closed strips whose external surface is likewise uneven or "chipped", with the particularity that such projections (8) are provided in recessed areas (9) of such piston surface, as is very clearly shown in figure 4.

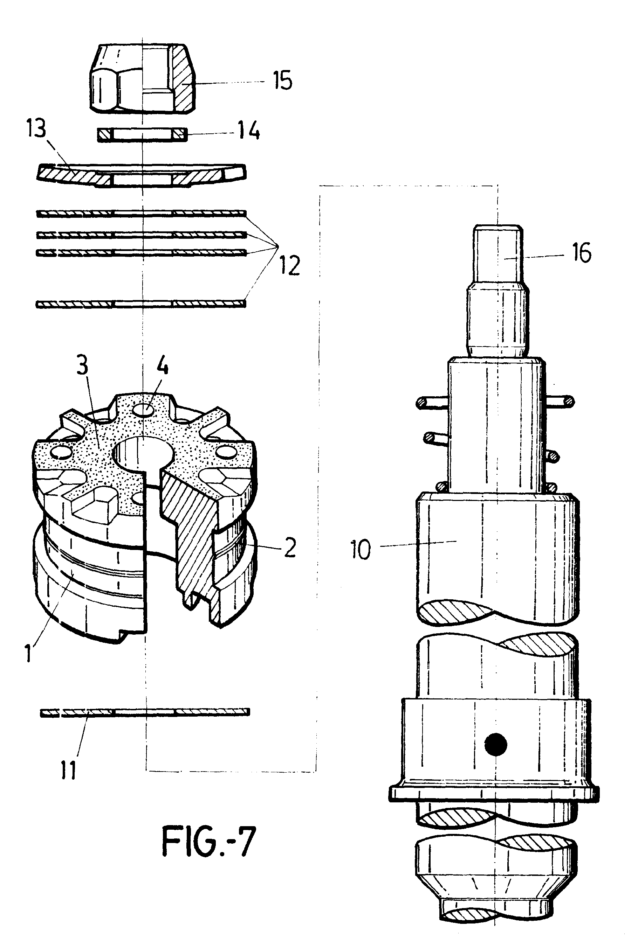

Figure 7 shows the said piston (1) in a suitable position to be mounted on the respective rod (10) of the relevant shock absorber, with a flexible sheet (11) inserted between the lower piston (1) surface and the respective stepping in rod (10), for compression.

Upon mounting the piston (1) on the rod (10), a plurality of other flexible sheets (12), and a deflector (13) allowing and limiting bending of such sheets (12), is also used, such deflector (13) being followed by a washer (14) which is pressed against by the end nut (15) that is to be screwed to the actual rod (10) end (16), whereupon mounting shall be completed and the piston (1) will be held to the rod (10).

Because of the piston uneven or chipped surface (3), and the likewise "chipped" opposite surface's narrow strips or support lines (8), the relevant flexible washers (12) and (11) will be respectively supported by rough surfaces thereby to prevent adhesion that usually takes place between such washers and the piston, as in conventional shock absorbers, which obviously prevents the noise resulting in the said conventional shock absorbers when the piston changes its direction of displacement, for the pounding causes such noise when the surfaces are flat, the noise being however obviously obviated when the flexible sheets (11) and (12) are supported by an uneven or "chipped" surface, as in the case of the piston subject of the invention.

We feel that the device has now been described at sufficient length for any expert in the art to have grasped the full scope of the invention and the advantages it offers.

The materials, shape, size and layout of the elements may be altered provided that this entails no modification of the essential features of the invention.

## Claims

1. Piston (1) for shock absorbers, designed to be mounted on a rod (10) that is axially displaceable within a shock absorber's cylinder, which piston (1) has through holes (4) for the flow of liquid in and out of the two chambers delimited by such piston (1) within the shock absorber's cylinder, said piston (1) being combined with washers (11,12) provided with holes and flexible sheets facing the respective surfaces of the piston in order to control liquid flow in and out of the two chambers delimited by such piston, characterised in that one of the piston body surfaces is rough because of respective embossments that are provided on most of the said surface, it having been foreseen that the opposite surface be provided with projections (8) surrounding pairs of piston through holes (4), rich projections (8) are provided in recessed areas (9) and their external surface is likewise uneven or has respective embossments, such unevenness on either surface constituting supports for the relevant flexible sheets (11,12) mounted together with the piston (1) in the relevant shock absorber's rod (10).

2. Piston for shock absorbers as in claim 1, characterised in that the side external piston surface is provided with at least an annular rib (2) that can, but need not, be centred, for attachment of the relevant polytetrafluorethylene ring or segment guiding the piston upon displacement thereof.

## Patentansprüche

1. Stossdämpferkolben (1), so ausgebildet, dass er auf einer Stange (10) montiert wird, die sich axial innerhalb eines Stossdämpferzylinders bewegt, wobei der Stossdämpferkolben (1) Durchgangsöffnungen (4) für den Ein- und Austritt der Flüssigkeit der beiden, durch diesen Stossdämpferkolben (1) im Innern des Stossdämpferzylinders abgegrenzten Kammern aufweist und der Stossdämpferkolben (1) mit mit Öffnungen versehenen Unterlegscheiben (11, 12) und mit elastischen Lamellen verbunden ist, die den jeweiligen Flächen des Stossdämpferkolbens gegenüberliegen, um den Ein- und Austritt der Flüssigkeit der beiden, durch den erwähnten Stossdämpferkolben abgegrenzten Kammern zu steuern, dadurch gekennzeichnet, dass eine der Flächen des Kolbenkörpers auf Grund der über den grössten Teil dieser Fläche verteilten reliefartigen Ausbildungen rauh ist und daneben vorgesehen wird, dass die gegenüberliegende Fläche Vorsprünge (8) besitzt, welche über die Öffnungen (4) Kolbenpaare umgeben; diese Vorsprünge (8) werden in ausgesparten Bereichen (9) angeordnet und haben ebenfalls eine rauhe oder mit reliefartigen Ausbildungen versehene Fläche, wobei diese Ausbildungen bei beiden Flächenarten Halterungen für die entsprechenden elastischen Lamellen (11,12) bilden, die zusammen mit dem Styossdämpferkolben (1) an der Stange (4) des jeweiligen Stossdämpfers montiert werden.

2. Stossdämpferkolben, nach Anspruch 1 dadurch gekennzeichnet, dass die seitliche Aussenfläche des Stossdämpferkolbens mindestens eine Ringwulst (2) aufweist, die zentriert angeordnet werden kann, was jedoch nicht unbedingt erforderlich ist, um das Segment bzw. den Ring aus Polytetrafluoräthylen zur Führung des Stossdämpferkolbens in seiner Fortbewegung verbinden zu können.

## Revendications

1. Piston (1) d'amortisseur de chocs, dessiné pour être monté sur une tige (10), qui peut se déplacer axialement à l'intérieur d'un cylindre d'amortisseur de chocs, dont le piston (1) a des trous creux (4) pour laisser entrer et sortir le liquide des deux chambres délimitées par le piston en question (1) à l'intérieur du cylindre de l'amortisseur de chocs, ledit piston (1) se trouvant combiné avec des rondelles (11, 12) qui sont percées de trous et avec des lames souples faisant face aux surfaces respectives du piston, afin de contrôler l'entrée et la sortie du liquide des deux chambres délimitées par le piston mentionné plus haut, qui est caractérisé par le fait qu'une des surfaces du corps du piston est inégale à cause des bosses respectives dont elle est pourvue dans sa majeure partie et qu'il a été prévu de munir la surface opposée de saillies (8) qui entourent des paires de trous creux (4) du piston, lesquelles saillies (8) se trouvent placées dans des zones renfoncées (9), leur surface extérieure étant aussi inégale ou ayant ses bosses respectives, lesquelles inégalités constituent sur l'une et l'autre surfaces des supports pour les lames souples correspondantes (11, 12), montées en même temps que le piston (1) sur la tige (10) de l'amortisseur de chocs en question.

2. Piston d'amortisseur de chocs, conforme à la revendication 1, qui est caractérisé par le fait que la surface latérale extérieure du piston est pourvue pour le moins d'une nervure annulaire (2), qui peut être centrée, bien que non nécessairement, de manière à ce qu'on puisse y attacher l'anneau ou segment voulu en polytétrafluoréthylène, qui guide le piston au cours de son déplacement.
